# FASCICULE DE BREVET EUROPEEN

(11) **EP 3 311 019 B1**
(45) Date de publication et mention de la délivrance du brevet: **12.06.2019**
(21) Numéro de dépôt: 16736907.3
(22) Date de dépôt: 21.06.2016
(51) Int. Cl.: F02K 9/64, F02K 9/94, F02K 9/95

(54) **ALLUMEUR DE MOTEUR-FUSÉE RÉTRACTABLE**
EINZIEHBARER RAKETENMOTORZÜNDER
RETRACTABLE ROCKET MOTOR IGNITER

(30) Priorité: 22.06.2015 FR 1501287
(43) Date de publication de la demande: 25.04.2018
(73) Titulaire: ArianeGroup SAS, 75015 Paris (FR)
(72) Inventeur: ROZ, Gérard, 27510 Pressagny l'Orgueilleux (FR)
(74) Mandataire: Cabinet Beau de Loménie
(86) Numéro de dépôt international: PCT/FR2016/051510
(87) Numéro de publication internationale: WO 2016/207535

(56) Documents cités:
- WO-A1-91/03638
- JP-A- 2009 030 529
- US-A- 2 674 088
- US-A- 3 300 981

## Description

### DOMAINE DE L'INVENTION

La présente invention concerne le domaine des allumeurs de moteur-fusée, notamment les allumeurs électrique mais pas uniquement, une chambre de combustion de moteur-fusée équipée d'un tel allumeur, et un moteur-fusée équipé d'une telle chambre de combustion.

### ETAT DE LA TECHNIQUE ANTERIEURE

Les allumeurs connus comprennent généralement une bougie, et un dispositif intermédiaire entre la bougie et la chambre de combustion pour initier la combustion au sein de la chambre de combustion du moteur-fusée. La bougie initie une combustion au sein du dispositif intermédiaire, tandis que le dispositif intermédiaire initie la combustion du ou des ergols au sein d'une chambre de combustion du moteur-fusée. Ce dispositif intermédiaire permet notamment d'isoler la bougie de la chambre de combustion, et ainsi de limiter les contraintes thermiques subies par ladite bougie.

D'autres allumeurs selon l'état de la technique sont connus de US 2,674,088 et WO 91/03638.

Ces allumeurs connus présentent l'inconvénient de mettre en jeu un nombre important de composants, dont la mise en oeuvre peut s'avérer complexe. De plus une telle complexité est source de panne, et génère un coût de fabrication élevé.

### PRESENTATION DE L'INVENTION

Un mode de réalisation concerne un allumeur de moteur-fusée comprenant une bougie mobile entre une position reployée et une position déployée, et une chambre de compensation de pression présentant une première cavité interne et une deuxième cavité interne distincte de la première cavité, la première cavité et la deuxième cavité étant séparées par au moins une embase mobile, la bougie étant solidaire de l'embase mobile, la première cavité communiquant avec un premier évent tandis que la deuxième cavité communique avec un deuxième évent distinct du premier évent.

La première cavité interne communique via le premier évent, pouvant être par exemple un orifice, avec l'extérieur de la chambre de compensation de pression, par exemple une première enceinte externe à l'allumeur, par exemple une chambre de combustion. Ainsi, la pression au sein de la première cavité interne est par exemple égale à la pression au sein de ladite première enceinte externe à l'allumeur. La deuxième cavité interne communique via le deuxième évent, pouvant être un orifice, distinct de l'orifice formant le premier évent, avec l'extérieur de la chambre de compensation de pression, par exemple une deuxième enceinte (distincte de la première enceinte) externe à l'allumeur, par exemple une enceinte autre qu'une chambre de combustion. Ainsi, la pression au sein de la deuxième cavité interne est par exemple égale à la pression au sein de ladite deuxième enceinte externe à l'allumeur.

On comprend que la bougie est fixée sur l'embase mobile. Ainsi, lorsque l'embase mobile se déplace au sein de la chambre de compensation de pression, la bougie se déplace de la même manière entre la position déployée et la position reployée.

On comprend également que l'embase est mobile au sein de la chambre de compensation en fonction de la différence de pression entre le premier évent et le deuxième évent. En fonction de cette différence de pression l'embase prend différentes positions, entraînant ainsi la bougie entre la position déployée et la position reployée.

Par exemple, l'allumeur peut être monté sur un moteur-fusée de sorte que le premier évent est en communication fluidique avec la chambre de combustion tandis que le deuxième évent est en communication fluidique avec une autre enceinte au sein du moteur, cette autre enceinte étant par exemple à la pression de l'atmosphère environnante. Ainsi, lorsque le moteur-fusée est arrêté, la pression au sein de la première cavité interne est sensiblement égale à la pression au sein de la deuxième cavité interne. Dans cette configuration, la bougie mobile est en position déployée. Lorsque le moteur-fusée est allumé, la combustion des ergols engendre des gaz chauds qui provoquent une augmentation de pression au sein de la chambre de combustion, grâce à quoi la pression au sein de la première cavité interne augmente par l'intermédiaire du premier évent. Ainsi, la différence de pression entre ladite première cavité interne et la deuxième cavité interne provoque le déplacement de l'embase mobile, et par conséquent de la bougie mobile au sein de la chambre de compensation de pression, la bougie passant alors de la position déployée à la position reployée. Dans cette position reployée, la bougie mobile subie des contraintes thermiques moindres qu'en position déployée lorsque le moteur-fusée est en fonctionnement, permettant ainsi d'éviter sa dégradation. A l'inverse, lorsque le moteur-fusée est de nouveau arrêté, la pression au sein de la première cavité interne diminue, de sorte que la différence de pression entre la première et la deuxième cavité interne est suffisamment faible pour permettre à la bougie mobile de passer à nouveau en position déployée, correspondant à sa position lorsque le moteur-fusée est arrêté. En d'autres termes, lorsque l'allumeur est monté dans une chambre de combustion, un des évents étant en communication fluidique avec ladite chambre de combustion tandis que l'autre évent est en communication fluidique avec une autre zone, la surpression au sein de la chambre de combustion lors de son fonctionnement amène la bougie en position reployée, tandis que lorsque la chambre de combustion ne fonctionne pas, la bougie est dans la position déployée.

Il est ainsi possible de disposer la bougie dans une position apte à initier la combustion au sein d'une chambre de combustion, cette position correspondant par exemple à la position déployée, et une position où elle est protégée des contraintes thermiques au sein de la chambre de combustion, cette position correspondant par exemple à la position reployée. Un tel allumeur présente également l'avantage que le moteur-fusée peut être allumé et éteint à plusieurs reprises.

Dans certains modes de réalisation, l'embase au sein de la chambre de compensation de pression se déplace à partir d'une différence de pression prédéterminée, ou seuil de différence de pression. Ceci permet de s'assurer du bon allumage des ergols avant de rétracter la bougie.

Dans certains modes de réalisation, un soufflet s'étend entre l'embase mobile et au moins une paroi de la chambre de compensation de pression, le soufflet et l'embase mobile séparant, à l'intérieur de la chambre de compensation de pression, la première cavité et la deuxième cavité.

Le soufflet permet une séparation étanche dans la chambre de compensation de pression entre la première cavité interne et la deuxième cavité interne tout en autorisant le déplacement de l'embase mobile, en fonction de la différence de pression.

Par exemple, le soufflet est à la fois solidaire de l'embase mobile, et d'au moins une paroi de la chambre de compensation de pression, qui est immobile par rapport à l'embase.

Dans certains modes de réalisation, le soufflet présente une rigidité suffisante pour exercer une force de rappel sur l'embase mobile, cette force de rappel tendant à amener la bougie en position reployée ou en position déployée. Ceci permet par exemple de s'assurer que la bougie retourne dans la position déployée lorsque le moteur-fusée ne fonctionne pas.

Dans certains modes de réalisation, un ressort de rappel tend à ramener la bougie en position déployée.

Par exemple, le ressort de rappel s'étend entre l'embase mobile et une paroi de la chambre de compensation de pression.

Par exemple, le ressort de rappel est fixé à la fois à l'embase mobile, et à la paroi de la chambre de compensation de pression.

De manière générale, le ressort est disposé de sorte que, grâce à la force de rappel qu'il exerce sur l'embase mobile, cette dernière tend à se déplacer de façon à positionner la bougie mobile en position déployée. Ainsi, lorsque l'allumeur est monté sur un moteur-fusée, lorsque le moteur-fusée est éteint, le ressort de rappel maintient la bougie mobile en position déployée. A l'inverse, lorsque le moteur-fusée est allumé (i.e. qu'il y a une combustion au sein de la chambre de combustion), la force engendrée par la différence de pression entre la première cavité interne et la deuxième cavité interne s'oppose à la force de rappel du ressort. Par conséquent, lorsque la pression au sein de la première cavité interne génère une force supérieure à la force de rappel, la bougie mobile, passe de la position déployée à la position reployée. En ajustant la rigidité du ressort on ajuste une valeur de différence de pression prédéterminée, ou de seuil de différence de pression, à partir de laquelle l'embase mobile se déplace.

Dans certains modes de réalisation, la chambre de compensation de pression présente au moins une butée pour limiter le déplacement de l'embase.

Ladite butée est par exemple fixée sur une surface interne de la chambre de compensation de pression. Une telle butée permet de limiter le déplacement de l'embase mobile selon une course adaptée.

Dans le cas où l'allumeur comprend également un ressort de rappel, ladite butée permet notamment de s'assurer que l'embase et le ressort restent en contact, et que le ressort ne déplace pas l'embase dans une position non désirée. Dans ce cas, une telle butée participe à s'assurer de la valeur de différence de pression prédéterminée, ou de seuil de différence de pression, dans la position où l'embase coopère avec la butée.

Dans certains modes de réalisation, la chambre de compensation de pression présente une première et une deuxième butée, la première butée coopérant avec l'embase lorsque la bougie est dans la position reployée tandis que la deuxième butée coopère avec l'embase lorsque la bougie est en position déployée. Lorsque l'allumeur comprend un soufflet, la présence de ce couple de butées permet de limiter la course de l'embase entre deux positions extrêmes à une valeur compatible avec les caractéristiques mécaniques du soufflet et du ressort, et éviter ainsi un écrasement ou une distension de ces derniers. Par ailleurs, lorsqu'il y a un ressort de rappel la deuxième butée permet d'ajuster une précontrainte du ressort à une valeur prédéterminée correspondant au seuil de pression à partir de laquelle la bougie passe en position reployée. La première butée permet également d'éviter, lorsque l'embase est plaquée avec un effort suffisant sur ladite première butée en position reployée, des mouvements de vibration, sous l'effet des fluctuations de pression dans la chambre de combustion, de la bougie mobile. Dans certains modes de réalisation, la chambre de compensation de pression s'étend selon une direction axiale, la bougie et l'embase étant mobiles selon la direction axiale.

Cette disposition selon une direction axiale présente l'avantage de présenter une configuration structurelle simple, fiable et facile à fabriquer.

Dans certains modes de réalisation, le premier évent et le deuxième évent sont disposés sur des extrémités opposées de la chambre de compensation de pression selon la direction axiale de la chambre.

Cette configuration présente l'avantage de permettre de séparer facilement la chambre de compensation de pression en deux volumes distincts, la première cavité interne et la deuxième cavité interne et de mettre facilement chacune de ces cavités en communication fluidique avec des enceintes externes distinctes.

Lorsque l'allumeur est monté sur une chambre de combustion, la première cavité interne est par exemple la plus proche de la chambre de combustion selon la direction axiale de la chambre de compensation de pression, et la deuxième cavité interne est par exemple la plus éloignée de la chambre de combustion selon la direction axiale de la chambre de compensation de pression.

Dans certains modes de réalisation, un guide tubulaire configuré pour guider la bougie en translation entre la position reployée et la position déployée, le premier évent débouchant dans le guide.

On comprend qu'un « guide tubulaire » est par exemple un guide cylindrique de section quelconque, par exemple une section circulaire, elliptique, polygonale, etc.

Le guide tubulaire présente l'avantage de permettre à la bougie mobile de se déplacer en translation uniquement selon la direction axiale de la chambre de compensation de pression, en empêchant ainsi tout déplacement latéral, perpendiculaire à cette direction axiale, de la bougie mobile. On comprend que la bougie mobile se déplace en translation au sein du guide tubulaire selon la direction axiale du guide, cette direction axiale du guide étant confondue avec la direction axiale de la chambre de compensation.

Dans certains modes de réalisation, le guide tubulaire forme un fourreau de protection thermique de la bougie en position reployée. En position reployée, la bougie est donc protégée thermiquement par le guide.

Dans certains modes de réalisation, un jeu est ménagé entre ledit guide tubulaire et la bougie mobile. Un tel jeu permet de placer le premier ou le deuxième évent entre le guide et la bougie, grâce à quoi le guide permet de mettre ledit évent, et la cavité interne correspondante, à la pression de la chambre de combustion.

Dans certains modes de réalisation, un troisième évent relie la première cavité et la deuxième cavité, le troisième évent étant configuré pour limiter le débit de fluide le traversant à une valeur prédéterminée.

Le troisième évent, pouvant être un trou traversant, est par exemple réalisé sur l'embase mobile. Le troisième évent permet ainsi de mettre en communication la première cavité interne et la deuxième cavité interne. Le troisième évent étant configuré pour limiter le débit de fluide le traversant à une valeur prédéterminée, il est ainsi possible d'ajuster la différence de pression entre la première et la deuxième cavité interne à une valeur prédéterminée. Ceci permet par exemple d'éviter une détérioration de l'allumeur à cause d'une éventuelle surpression dans une cavité.

Un mode de réalisation concerne également une chambre de combustion de moteur-fusée comprenant un allumeur de moteur-fusée selon l'un quelconque des modes de réalisation décrits dans le présent exposé, et une enceinte de combustion dans laquelle, en position déployée, la bougie mobile s'étend au moins en partie à l'intérieur de l'enceinte de combustion tandis qu'en position reployée la bougie mobile est disposée à l'extérieur de l'enceinte de combustion.

Dans certains modes de réalisation, la chambre de combustion de moteur-fusée comprend une partie froide adjacente à l'enceinte de combustion, dans laquelle la bougie mobile s'étend au sein de la partie froide en position reployée.

Par « partie froide » on entend une partie plus froide que l'enceinte de combustion lorsque le moteur-fusée est en fonctionnement.

Cette partie froide permet de mieux protéger thermiquement la bougie mobile vis-à-vis de la chambre de combustion, lorsque ladite bougie est en position reployée.

Un mode de réalisation concerne également un moteur-fusée comprenant une chambre de combustion selon l'un quelconque des modes de réalisation décrits dans le présent exposé.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un moteur-fusée,
- les figures 2A et 2B représentent plus en détail l'allumeur du moteur-fusée de la figure 1, respectivement en position déployée et en position reployée,
- la figure 3 représente un deuxième mode de réalisation de l'allumeur du moteur-fusée, et
- La figure 4 représente un troisième mode de réalisation de l'allumeur du moteur-fusée.

### DESCRIPTION DETAILLEE D'EXEMPLES DE REALISATION

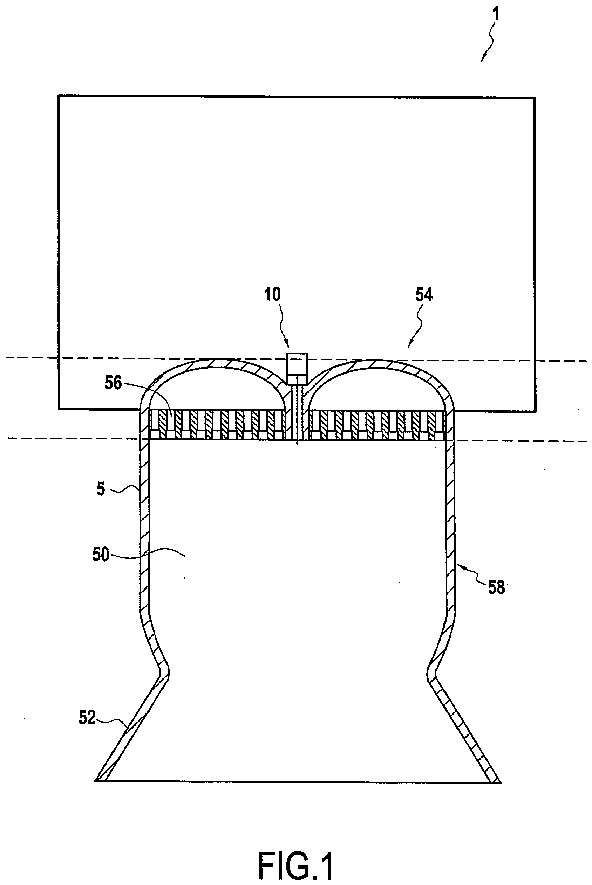

La figure 1 représente un moteur-fusée 1 comprenant une chambre de combustion 5. La chambre de combustion 5 comporte une enceinte de combustion 50 et débouche sur une tuyère d'éjection 52. La chambre de combustion 5 comporte également une rampe d'injecteurs 56, permettant d'injecter des ergols dans l'enceinte de combustion 50. Une partie froide 54 disposée en amont de la rampe d'injecteurs 56 reçoit les moyens d'amenée des ergols vers la rampe d'injecteurs 56. Ainsi, la partie froide 54, est refroidie par la circulation des ergols avant leur combustion. Cette partie froide 54 est adjacente à l'enceinte de combustion 50. Ainsi, les ergols s'écoulent depuis la partie froide vers l'enceinte de combustion par l'intermédiaire de la rampe d'injecteurs 56. La chambre de combustion 5 comprend un allumeur de moteur-fusée 10 permettant d'initier la combustion des ergols injectés au sein de l'enceinte de combustion 50 par la rampe d'injecteurs 56. On comprend que la partie de la chambre de combustion 5 qui accueille l'enceinte de combustion forme la partie chaude 58 de la chambre de combustion 5.

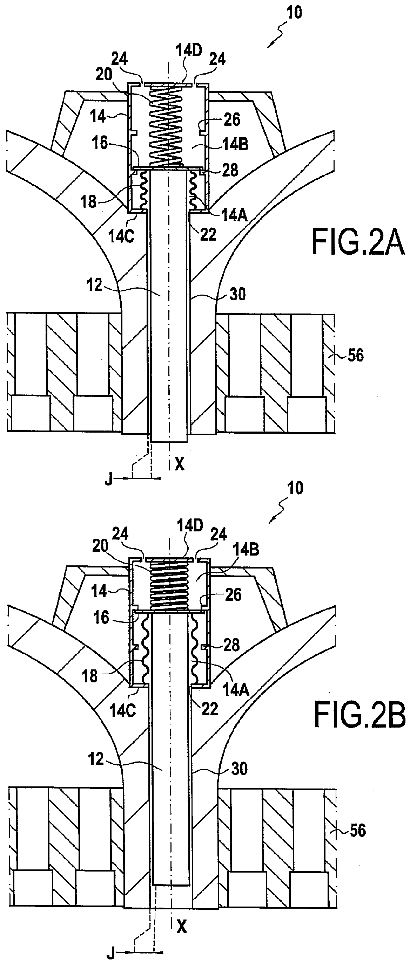

Les figures 2A et 2B représentent plus en détail l'allumeur du moteur-fusée 10 de la figure 1. L'allumeur de moteur-fusée 10 comporte une bougie mobile 12 qui est représentée en position déployée sur la figure 2A, et en position reployée sur la figure 2B.

L'allumeur de moteur-fusée 10 comporte une chambre de compensation de pression 14, dans laquelle peut se déplacer une embase mobile 16 en translation suivant une direction axiale X de la chambre de compensation de pression 14, le déplacement selon la direction axiale X de l'embase mobile 16 étant limité par une première butée 26 et une deuxième butée 28. La bougie mobile 12 est fixée à l'embase mobile 16, de sorte qu'un déplacement de l'embase mobile 16 provoque un déplacement identique de la bougie mobile 12, la bougie et l'embase mobile étant solidaires par des moyens non représentés connus par ailleurs.

Dans cet exemple, un soufflet 18 s'étend selon la direction axiale X, entre l'embase mobile 16 et une première paroi 14C de la chambre 14. Le soufflet est fixé à la fois à l'embase mobile 16 et à la paroi 14C. Le soufflet 18 et l'embase mobile 16 séparent de manière étanche la chambre de compensation de pression 14 en deux cavités distinctes, une première cavité interne 14A et une deuxième cavité interne 14B, tout en autorisant le déplacement de l'embase mobile.

La première cavité interne 14A communique avec un premier évent 22, lui-même communiquant avec l'enceinte de combustion 50. La deuxième cavité interne 14B communique avec un deuxième évent 24, lui-même communiquant avec l'extérieur de la chambre de combustion. Le premier évent 22 et le deuxième évent 24 sont disposés sur des extrémités opposées de la chambre de compensation de pression 14 selon la direction axiale X, le premier évent 22 étant ménagé dans la première paroi 14C, tandis que le deuxième évent 24 est ménagé dans une deuxième paroi 14D opposée, selon la direction axiale X, à la première paroi 14C. On comprend bien entendu que les parois de la chambre de compensation 14 sont immobiles par rapport à l'embase 16.

Un ressort de rappel 20, dans cet exemple un ressort à compression, s'étend selon la direction axiale X, entre l'embase mobile 16 et une deuxième paroi 14D. Le ressort de rappel 20 est fixé à la fois à l'embase mobile 16 et à la paroi 14D. La force de rappel, résultant de sa raideur, qu'exerce le ressort 20 sur l'embase mobile 16, tend à déplacer cette dernière jusqu'à la deuxième butée 28, et ainsi à maintenir la bougie mobile dans une position déployée prédéterminée (voir figure 2A).

L'allumeur de moteur-fusée 10 comprend également un guide tubulaire 30, dans lequel la bougie mobile 12 se déplace en translation selon la direction axiale X. Un jeu radial J est ménagé entre la bougie mobile 12 et le guide tubulaire 30 tandis que le premier évent 22 débouche axialement dans l'espace résultant du jeu J. La première cavité interne 14A, par l'intermédiaire du premier évent 22, et via le guide tubulaire 30 communique avec l'enceinte de combustion 50. Par conséquent, la première cavité interne 14A est à la pression de l'enceinte de combustion 50.

Lorsque le moteur-fusée 1 est arrêté, la pression dans l'enceinte de combustion 5 est égale à la pression à l'extérieur de la chambre de combustion. Ainsi, les pressions au sein de la première cavité interne 14A et de la deuxième cavité interne 14B sont égales. Grâce à la force de rappel exercée par le ressort 20 sur l'embase mobile 16, la bougie mobile 12 reste alors en position déployée (voir figure 2A). Dans cette configuration, l'extrémité de la bougie mobile 12, opposée à l'embase mobile 16 selon la direction axiale X, fait saillie dans l'enceinte de combustion 50. Lors de l'allumage du moteur-fusée 1, la bougie peut ainsi, par exemple par une impulsion électrique, initier la combustion des ergols injectés par la rampe d'injecteurs 56 au sein de la chambre de combustion 5.

Au cours de la phase d'allumage du moteur, la pression au sein de la chambre de combustion croît, engendrant une augmentation de la pression au sein de la première cavité interne 14A, cette dernière étant en communication fluidique avec l'enceinte de combustion 50. Dans le même temps, grâce à la séparation étanche assurée par le soufflet 18 et l'embase mobile 16, la pression au sein de la deuxième cavité interne 14B reste constante et égale à la pression à l'extérieur de la chambre de combustion, la deuxième cavité interne 14B communiquant via le deuxième évent 24 avec l'extérieur de la chambre de combustion 5. Par conséquent, une différence de pression est créée entre la première et la deuxième cavité interne, engendrant une force s'opposant à la force de rappel du ressort 20. Dans cet exemple, il y a deux évents 24. Bien entendu, il pourrait n'y avoir qu'un seul évent 24, ou plus de deux évents 24.

Lorsque la pression au sein de la première cavité interne génère une force supérieure à la force de rappel, l'embase mobile 16 se déplace de façon à comprimer le ressort de rappel 20, la bougie mobile 12 passant alors de la position déployée à la position reployée (voir figure 2B), en se déplaçant selon la direction axiale X, jusqu'à la première butée 26. En ajustant les dimensions et la rigidité du ressort on ajuste une valeur de différence de pression prédéterminée, ou de seuil de différence de pression, à partir de laquelle l'embase mobile 16 se déplace. Cet ajustement permet à la bougie mobile 12, au moment de l'allumage du moteur-fusée, de rester en position déployée suffisamment longtemps pour assurer l'allumage complet du moteur, avant de passer en position reployée lorsque la phase d'allumage est terminée. Dans la position reployée, l'extrémité de la bougie mobile 12 ne fait plus saillie dans l'enceinte de combustion 50. Ladite bougie est alors entièrement dans la partie froide 54 de la chambre de combustion (figure 2B). La bougie ne subit donc pas les contraintes thermiques existant dans l'enceinte de combustion 50, et est préservée de toute dégradation thermique.

Lorsque le moteur-fusée 1 est arrêté, la pression au sein de l'enceinte de combustion 50 diminue. A partir du seuil de différence de pression, la force de rappel exercée par le ressort 20 devient supérieure à la force engendrée par cette différence de pression, provoquant le passage de la bougie mobile 12 de la position reployée à la position déployée. La bougie peut alors initier une nouvelle combustion.

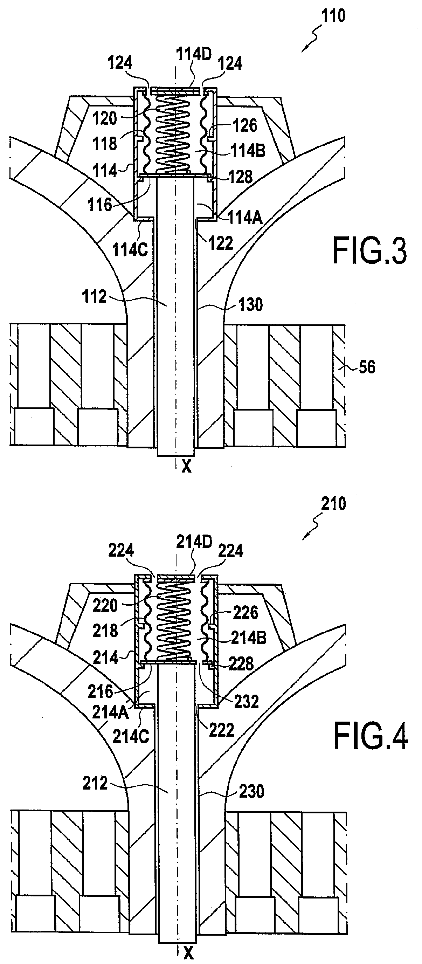

La figure 3 représente un deuxième mode de réalisation d'allumeur du moteur-fusée 110. Les signes de référence des différents éléments sont incrémentés de 100 par rapport au premier mode de réalisation. Seuls les éléments qui diffèrent sont décrits, les éléments inchangés n'étant pas décrits de nouveau. Dans ce deuxième mode de réalisation, le soufflet 118 s'étend selon la direction axiale X entre l'embase mobile 116 et la deuxième paroi 114D. Le soufflet est fixé à la fois à l'embase mobile 116 et à la paroi immobile de la chambre 114D. Le soufflet 118 et l'embase mobile 116 séparent de manière étanche la chambre de compensation de pression 114 en deux volumes distincts, une première cavité interne 114A et une deuxième cavité interne 114B, tout en autorisant le déplacement de l'embase mobile.

Dans cet exemple, le soufflet 118 présente une rigidité suffisante pour exercer également une force de rappel sur l'embase mobile 116 qui n'est pas négligeable vis-à-vis de celle exercée par le ressort 120. Bien entendu, les dimensions et la raideur du soufflet 118 et du ressort 120 sont prises en compte conjointement de sorte à ajuster une valeur de différence de pression prédéterminée, ou de seuil de différence de pression, à partir de laquelle l'embase mobile se déplace. Le fonctionnement de cet allumeur 110 est similaire à celui de l'allumeur 10 décrit précédemment.

La figure 4 représente un troisième mode de réalisation d'allumeur du moteur-fusée 210. Les signes de référence des différents éléments sont incrémentés de 100 par rapport au deuxième mode de réalisation. Seuls les éléments qui diffèrent sont décrits, les éléments inchangés n'étant pas décrits de nouveau. Dans ce troisième mode de réalisation, un troisième évent 232 met en communication la première cavité interne 214A et la deuxième cavité interne 214B, le troisième évent 232 étant configuré pour limiter le débit de fluide le traversant à une valeur prédéterminée.

Le troisième évent 232, qui est un trou traversant, est ménagé dans l'embase mobile 216, et permet ainsi de pouvoir ajuster la pression au sein de la deuxième cavité interne 214B. Bien entendu, la section du deuxième évent 224 doit également être prise en compte pour cette régulation de pression. Cet ajustement de la pression au sein de la deuxième cavité interne offre la possibilité de choisir les dimensions et la raideur du soufflet 218 et du ressort 220 permettant de créer la force de rappel nécessaire au maintien de la bougie mobile 212 en position déployée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

Par conséquent, la description et les dessins doivent être considérés dans un sens illustratif plutôt que restrictif. Par exemple, il est bien entendu possible de ménager un troisième évent dans l'embase du premier mode de réalisation.

## Revendications

1. Allumeur de moteur-fusée (10, 110, 210) comprenant une bougie (12, 112, 212) mobile entre une position reployée et une position déployée, et **caractérisé en ce qu'**il comprend une chambre de compensation de pression (14, 114, 214) présentant une première cavité interne (14A, 114A, 214A) et une deuxième cavité interne (14B, 114B, 214B) distincte de la première cavité, la première cavité et la deuxième cavité étant séparée par au moins une embase mobile (16, 116, 216), la bougie étant solidaire de l'embase mobile, la première cavité communiquant avec un premier évent (22, 122, 222) tandis que la deuxième cavité communique avec un deuxième évent (24, 124, 224) distinct du premier évent.

2. Allumeur de moteur-fusée (10, 110, 210) selon la revendication 1, comprenant un soufflet (18, 118, 218) s'étendant entre l'embase mobile (16, 116, 216) et au moins une paroi de la chambre de compensation de pression (14, 114, 214), le soufflet et l'embase mobile séparant, à l'intérieur de la chambre de compensation de pression, la première cavité (14A, 114A, 214A) et la deuxième cavité (14B, 114B, 214B).

3. Allumeur de moteur-fusée (10, 110, 210) selon la revendication 1 ou 2, comprenant un ressort de rappel (20, 120, 220) tendant à ramener la bougie (12, 112, 212) en position déployée.

4. Allumeur de moteur-fusée (10, 110, 210) selon l'une quelconque des revendications 1 à 3, dans lequel la chambre de compensation (14, 114, 214) de pression présente au moins une butée pour limiter le déplacement de l'embase (16, 116, 216).

5. Allumeur de moteur-fusée (10, 110, 210) selon l'une quelconque des revendications 1 à 4, dans lequel la chambre de compensation de pression s'étend selon une direction axiale X, la bougie (12, 112, 212) et l'embase (16, 116, 216) étant mobiles selon la direction axiale X.

6. Allumeur de moteur-fusée (10, 110, 210) selon la revendication 5, comprenant un guide tubulaire (30, 130, 230) configuré pour guider la bougie (12, 112, 212) en translation entre la position reployée et la position déployée, le premier évent (22, 122, 222) débouchant dans le guide (30, 130, 230).

7. Allumeur de moteur-fusée (10, 110, 210) selon l'une quelconque des revendications 1 à 6, comprenant un troisième évent (232) reliant la première cavité (214A) et la deuxième cavité (214B), le troisième évent (232) étant configuré pour limiter le débit de fluide le traversant à une valeur prédéterminée.

8. Chambre de combustion (5) de moteur-fusée, comprenant un allumeur de moteur-fusée (10, 110, 210) selon l'une quelconque des revendications 1 à 6, et une enceinte de combustion (50) dans laquelle, en position déployée, la bougie mobile (12, 112, 212) s'étend au moins en partie à l'intérieur de l'enceinte de combustion (50) tandis qu'en position reployée la bougie mobile (12, 112, 212) est disposée à l'extérieur de l'enceinte de combustion (50).

9. Chambre de combustion (5) de moteur-fusée selon la revendication 8, comprenant une partie froide (54) adjacente à l'enceinte de combustion (5), dans laquelle la bougie mobile (12, 112, 212) s'étend au sein de la partie froide (54) en position reployée.

10. Moteur-fusée (1) comprenant une chambre de combustion (5) selon la revendication 8 ou 9.

## Patentansprüche

1. Zünder für einen Raketenmotor (10, 110, 210), umfassend eine Zündkerze (12, 112, 212), die zwischen einer eingefahrenen Position und einer ausgefahrenen Position beweglich und **dadurch gekennzeichnet ist, dass** er eine Druckausgleichskammer (14, 114, 214) mit einem ersten inneren Hohlraum (14A, 114A, 214A) und einem zweiten inneren Hohlraum (14B, 114B, 214B) umfasst, der vom ersten Hohlraum unabhängig ist, wobei der erste Hohlraum und der zweite Hohlraum durch mindestens eine bewegliche Basis (16, 116, 216) getrennt sind, wobei die Zündkerze mit der beweglichen Basis fest verbunden ist, wobei der erste Hohlraum mit einer ersten Entlüftung (22, 122, 222) in Verbindung steht, während der zweite Hohlraum mit einer zweiten Entlüftung (24, 124, 224) in Verbindung steht, die von der ersten Entlüftung unabhängig ist.

2. Raketenmotorzünder (10, 110, 210) nach Anspruch 1, umfassend einen Balg (18, 118, 218), der sich zwischen der beweglichen Basis (16, 116, 216) und mindestens einer Wand der Druckausgleichskammer (14, 114, 214) erstreckt, wobei der Balg und die bewegliche Basis innerhalb der Druckausgleichskammer den ersten Hohlraum (14A, 114A, 214A) und den zweiten Hohlraum (14B, 114B, 214B) trennen.

3. Raketenmotorzünder (10, 110, 210) nach Anspruch 1 oder 2, umfassend eine Rückstellfeder (20, 120, 220), die dazu dient, die Zündkerze (12, 112, 212) in die ausgefahrene Position zurückzuversetzen.

4. Raketenmotorzünder (10, 110, 210) nach einem der Ansprüche 1 bis 3, wobei die Druckausgleichskammer (14, 114, 214) mindestens einen Anschlag aufweist, um die Verschiebung der Basis (16, 116, 216) zu begrenzen.

5. Raketenmotorzünder (10, 110, 210) nach einem der Ansprüche 1 bis 4, wobei sich die Druckausgleichskammer in einer axialen Richtung X erstreckt, wobei die Zündkerze (12, 112, 212) und die Basis (16, 116, 216) in der axialen Richtung X beweglich sind.

6. Raketenmotorzünder (10, 110, 210) nach Anspruch 5, umfassend eine rohrförmige Führung (30, 130, 230), die dazu ausgelegt ist, die Zündkerze (12, 112, 212) in Translation zwischen der eingefahrenen Position und der ausgefahrenen Position zu führen, wobei die erste Entlüftung (22, 122, 222) in die Führung (30, 130, 230) mündet.

7. Raketenmotorzünder (10, 110, 210) nach einem der Ansprüche 1 bis 6, umfassend eine dritte Entlüftung (232), die den ersten Hohlraum (214A) und den zweiten Hohlraum (214B) verbindet, wobei die dritte Entlüftung (232) dazu ausgelegt ist, den sie durchströmenden Fluidstrom auf einen vorbestimmten Wert zu begrenzen.

8. Brennkammer (5) eines Raketenmotors, umfassend einen Raketenmotorzünder (10, 110, 210) nach einem der Ansprüche 1 bis 6 und einen Verbrennungsraum (50), wobei sich die bewegliche Zündkerze (12, 112, 212) in der ausgefahrenen Position zumindest teilweise innerhalb des Verbrennungsraums (50) erstreckt, während in der eingefahrenen Position die bewegliche Zündkerze (12, 112, 212) außerhalb des Verbrennungsraums (50) angeordnet ist.

9. Brennkammer (5) eines Raketenmotors nach Anspruch 8, umfassend einen an die Brennkammer (5) angrenzenden kalten Abschnitt (54), wobei sich die bewegliche Zündkerze (12, 112, 212) in der eingefahrenen Position innerhalb des kalten Abschnitts (54) erstreckt.

10. Raketenmotor (1), umfassend eine Brennkammer (5) nach Anspruch 8 oder 9.

## Claims

1. A rocket engine igniter (10, 110, 210), comprising a spark plug (12, 112, 212) that is movable between a retracted position and a deployed position, and **characterized in that** it comprises a pressure compensation chamber (14, 114, 214) comprising a first internal cavity (14A, 114A, 214A) and a second internal cavity (14B, 114B, 214B) distinct from the first cavity, the first cavity and the second cavity being separated by at least one movable base (16, 116, 216), the spark plug being secured to the movable base, the first cavity communicating with a first vent (22, 122, 222), while the second cavity communicates with a second vent (24, 124, 224) that is distinct from the first vent.

2. A rocket engine igniter (10, 110, 210) according to claim 1, including a bellows (18, 118, 218) extending between the movable base (16, 116, 216) and at least one wall of the pressure compensation chamber (14, 114, 214), the bellows and the movable base separating the first cavity (14A, 114A, 214A) from the second cavity (14B, 114B, 214B) within the pressure compensation chamber.

3. A rocket engine igniter (10, 110, 210) according to claim 1 or claim 2, including a return spring (20, 120, 220) tending to return the spark plug (12, 112, 212) towards the deployed position.

4. A rocket engine igniter (10, 110, 210) according to any one of claims 1 to 3, wherein the pressure compensation chamber (14, 114, 214) presents at least one abutment for limiting the movement of the base (16, 116, 216) .

5. A rocket engine igniter (10, 110, 210) according to any one of claims 1 to 4, wherein the pressure compensation chamber extends along an axial direction X, the spark plug (12, 112, 212) and the base (16, 116, 216) being movable along the axial direction X.

6. A rocket engine igniter (10, 110, 210) according to claim 5, including a tubular guide (30, 130, 230) configured to guide the spark plug (12, 112, 212) in translation between the retracted position and the deployed position, the first vent (22, 122, 222) opening out into the guide (30, 130, 230).

7. A rocket engine igniter (10, 110, 210) according to any one of claims 1 to 6, including a third vent (232) connecting the first cavity (214A) to the second cavity (214B), the third vent (232) being configured to limit the flow rate of fluid passing therethrough through a predetermined value.

8. A rocket engine combustion chamber (5) including a rocket engine igniter (10, 110, 210) according to any one of claims 1 to 6, and a combustion enclosure (50) wherein, in the deployed position, the movable spark plug (12, 112, 212) extends at least in part into the inside of the combustion enclosure (50), while in the retracted position the movable spark plug (12, 112, 212) is arranged outside the combustion enclosure (50).

9. A rocket engine combustion chamber (5) according to claim 8, including a cold portion (54) adjacent to the combustion chamber (5), wherein the movable spark plug (12, 112, 212) extends within the cold portion (54) in the retracted position.

10. A rocket engine (1) including a combustion chamber (5) according to claim 8 or claim 9.
